Europäisches Patentamt

European Patent Office

Office européen des brevets

(19)

(11) Publication number: **0 034 572**
A2

## (12) EUROPEAN PATENT APPLICATION

(21) Application number: 81830022.0

(22) Date of filing: 16.02.81

(51) Int. Cl.³: **C 10 H 21/10**
C 01 B 31/32, C 10 L 3/02

(30) Priority: 19.02.80 IT 4793080

(43) Date of publication of application:
26.08.81 Bulletin 81/34

(84) Designated Contracting States:
AT BE CH DE FR GB LI LU NL SE

(71) Applicant: Bravi, Achille
1.a Traversa 96, Via Provinciale
I-80126 Napoli(IT)

(71) Applicant: Vela, Francesco
28, Via Ortensio
I-80123 Napoli(IT)

(72) Inventor: Bravi, Achille
1.a Traversa 96, Via Provinciale
I-80126 Napoli(IT)

(72) Inventor: Vela, Francesco
28, Via Ortensio
I-80123 Napoli(IT)

(74) Representative: Bazzichelli, Alfredo et al,
c/o Società Italiana Brevetti Piazza Poli 42
I-00187 Roma(IT)

(54) A process for producing calcium carbide and acetylene and products obtained therefrom.

(57) Calcium carbide is produced from the reaction, in an electric arc, of carbon and calcium oxide in the presence of a small, but significant quantity of aluminum oxide; the carbide when in contact with water, develops an acetylenic gas which when combusted has extremely low unburnt residues, and is stable even in the presence of oxygen and at high pressure, said gas being particularly suited to be used as a fuel in internal combustion engines.

EP 0 034 572 A2

ACHILLE BRAVI

FRANCESCO VELA

A process for producing calcium carbide and
acetylene and products obtained therefrom.

This invention refers to a process for producing
acetylene gas which is obtained by placing calcium
carbide in contact with water.

The use of calcium carbide for producing acetylene
has long since been known. Acetylene produced this
way is presently used particularly in chemical synthesis
operations. Said acetylene has also been used in
rudimentary welding and lighting devices. The acetylene
gas obtained conventionally from calcium carbide
prepared in an electric arc furnace through reaction
of coke with calcium oxide according to presently
known methods cannot be employed for uses wherein
a gas having safety and efficiency characteristics
is required.

In fact, this gas is, per se, unstable in the presence
of air or oxygen, particularly when placed under pressure, and produces moreover, when burnt, a large quantity of polluting and unburnt substances.

Said gas is therefore absolutely not suited for use for instance as fuel in internal combustion engines as it almost immediately causes pollution of the combustion chamber, displays the phenomenon of detonation, i.e. of premature explosion, and furthermore generates a large quantity of undesirable exhaust products.

Said gas is equally unacceptable for use in domestic heating, gas stoves and the like both due to the danger of explosion and fowling of thermal exchange surfaces which come into contact with the combustion products.

The invention now allows, surprisingly, to obtain acetylene gas starting from a product consisting essentially of calcium carbide, which has the characteristics of being highly stable, even in the presence of air and at high pressure as well as combustion characteristics which are completely unusual besides being almost totally free from polluting and unburnt products.

The gas obtained according to this invention has surprisingly proven to have excellent standards for use as fuel in internal combustion engines since it is free from the detonation phenomenon and because it practically has no polluting exhaust products.

The gas may also be used safely in domestic applications in place of common liquefied gas contained in cylinders without causing fowling problems.

The gas produced on an industrial scale; may also be used as fuel for large plants such as electric power plants, naval plants and the like, also in consideration of its high heating power.

It is therefore one object of the present invention to provide a process for producing acetylene gas through the reaction of calcium carbide with water, said acetylenic gas having application standards which render it noticeably different from an acetylene gas obtained from calcium carbide produced according to prior art methods.

Another object of the present invention is to provide a process for producing a product consisting essentially of calcium carbide, said product being characterized in that it forms, by reacting with water, an acetylene gas which constitutes a high quality fuel.

The reaction used in this invention for obtaining calcium carbide is substantially the same as that used in the prior art, i.e. a reaction between calcium oxide (CaO) and carbon, in the form of coke, with heat absorbed from an electric arc.

However, according to the present invention, as in contrast with prior art methods, said reaction must take place in the presence of small, but significant quantities of aluminum oxide present in particle form and mixed with said usual reagents.

The quantity of aluminum oxide which must be present in the reaction, expressed in weight and calculated with respect to the quantity of CaO present in the reaction, ranges from 0.5 to 3% by weight, preferably such quantity being of 1.0 up to 1.5%, the optimum of such quantity being about 1.2%.

The material used for charging the aluminum oxide in the furnace may also be in the form of an ore containing aluminum oxide. Such ore may also contain minor quantities of iron oxide and silica, although it is preferable that the content of silica be kept low. It is further preferred that said ore be free from elements such as phosphor and sulphur.

As ores containing aluminum oxide it is therefore possible to employ, for example, different types of clays and a material which has shown to yield excellent results is bauxite.

From the foregoing, it is not necessary to employ a purified bauxite, but a raw bauxite ore may be employed which contains a percentage by weight of $Al_2O_3$ of about 20%, in addition to a minor quantity of silica and iron oxide. Such material has shown particularly effective and results in relatively low cost.

As starting material for the reaction, as previously
stated, it is possible to start from calcium oxide,
or from limestone which is preliminarily roasted
in order to be reduced to calcium oxide. Limestone
and/or calcium oxide used in the reaction must
have quite a high level of purity title, for example
over 95%, and it is recommended that such material
contain sulfates and phosphorous compounds in minimum
quantities.

As starting material containing carbon the usual
coals and coal schists, such as for example lignite,
anthracite, lythantrax and peat, may be employed.

No matter what the starting carbon material is,
it must be previously cleaned from tar till it reaches
the state of coke and in this state it is used in
the reaction.

The quantity ratios between CaO and coke may be
substantially those usually employed in this type
of reaction, i.e. about 65 kg of coke per 100 kg
of CaO. However, this ratio is not critical and
must be considered particularly taking into account
the carbon electrode which is used in the furnace,
as said carbon electrode becoming partially worn
could take part in the reaction.

The reaction takes place in an electric furnace,
the electrodes of which are formed by a hearth
and a carbon electrode between which the electric
arc is ignited, substantially following the known prior art in the field.

The operation may be conducted in a continuous or discontinuous manner. In the first case the calcium carbide melted during the reaction may be extracted in a continuous manner, while the reagents CaO and coke are continuously fed into the oven.

The process may also be carried out in a discontinuous manner, in which case the starting material may be limestone or calcium oxide, the operation in the first case comprising preliminary roasting of the limestone in order to reduce it to calcium oxide.

The size of the materials introduced in the reaction furnace is preferably of the order of particle size of granules from 1 to 5 mm. Preferably the ore containing the aluminum oxide is introduced in a smaller particle size granules, for example a particle size in the range of grit or coarse grit ranging between 0.1 and 4 mm.

The materials are so placed as to be uniformly distributed inside the furnace.

An example of manufacturing of the calcium carbide according to the invention will now be given, it being clear that such example is only for illustrative and not limiting purposes.

Example.

For the reaction an electric furnace is employed which contains heating resistances, plus a bottom electrode and upper hollow electrodes.

The example refers to a discontinuous kind of production, the starting materials of which are coke and limestone, for a total weight of the charge into the furnace of 4,800 g.

3,000 g of this total are of limestone, while 1,800 g are of coke. This quantity of coke is subdivided into two parts: a first part formed of 1,200 g is preset into granules of 20 to 30 mm, while the rest (600 g) is preset under the form of coarse grit in the range of 0.1 to 4.4 mm. The limestone as well presents a size of 20 to 40 mm.

The limestone and the 1,200 g of coke are mixed together and placed on the hearth of the furnace, around the bottom electrode.

According to the present invention, a quantity of about 100 g of bauxite grit having a 20% content of aluminum oxide is mixed together with the limestone and coke, the size of this grit being of about 0.1 up to 4 mm.

The furnace is closed and the temperature gradually brought, using the electric resistances, up to about 800 to 900°C in order to dissociate the limestone into calcium oxide and carbon dioxide.

As this operation is ended the electric arc electrodes are activated and at the same time, through the upper hollow electrodes, the remaining 600 g of coke in the size of small grit are introduced, in such a way that the input of the small grit inhibits the escape of the combustion gases from the furnace and the accumulation in the cavities of the electrodes of volatile carbon particles which would not otherwise partake in the reaction. This way of proceeding allows, furthermore, to limit the amount of wear on the electrodes.

The material so obtained, which maintains its particle size, is allowed to cool down in the furnace, and is then stored in containers which avoid contact of the material with the humidity of the atmosphere.

This product, essentially consisting of calcium carbide, when in contact with abundant water, develops a gas which mainly consists of acetylene.

The gas, after its development, may be properly decanted by bubbling in water and filtered in order to eliminate humidity, for example through a filter containing particles of active carbon or calcium chloride.

The gas when examined analytically has shown to consist essentially of acetylene, which burns without essentially producing any unburnt residue, in other words without soot.

Said gas is highly stable also in presence of air, even when placed under high pressure, as in contrast with acetylenic gas obtained with calcium carbide produced through known methods.

Comparison analysis have been made of the gas according to the invention and an acetylene gas obtained from conventional calcium carbide manufactured and sold by Montedison (Italy).

1 kg of conventional carbide placed in a gas generator containing water yielded 256 litres of gas measured in a volume counter at atmospheric pressure and at 18.5°C, while the same quantity of carbide according to the invention yielded 300 litres under the same conditions.

Furthermore it has been noted that with conventional carbide, gas development is rapid and relatively violent, while with the carbide according to the present invention the development of gas is slower and regular.

The measure of specific weight of conventional gas is 1157 g/m3, while the specific weight of the gas according to the invention is 1161 g/m3 at 18.5°C and at an atmospheric pressure.

The acetylene gas according to the invention has proven in a surprising and completely unpredictable way that it may be employed as fuel for internal combustion engines with excellent results, both as far as efficiency of combustion, absence of polluting matter and polluting exhaust residues are concerned. Furthermore the gas in its use in internal combustion engines does not display the phenomenon of detonation which is instead regularly displayed by acetylene produced through carbide obtained by the prior art.

The acetylene gas according to this invention, collected in containers at a pressure of 20-25 atmospheres, has been delivered at a pressure of 0.5 gauge atmospheres, through a valve of the type used for supplying automobiles running on liquefied petroleum gas, in order to supply motors of different automobiles with excellent results.

In another test as fuel for internal combustion engines, the gas according to this invention has been bottled in gas bottles, dissolved ir acetone and supplied through a dispenser of the type used for the liquefied petroleum gas to an engine of a Fiat 124 Special automobile.

With such fuel about 2,000 km have been travelled and successively the motor has been overhand and has undergone an accurate examination. No abnormal condition has been found with respect to tie various members of the motor and it has been noticed that the spark plugs did not display any format..on of

carbon deposits.

It has been noticed that for every 400 km travelled with 4 people on board the car, the average consumption of gas dissolved has been 14.500 kg which equal about 18,000 liters of normal gas. Such quantity corresponds to 55 kg of the solid material of calcium carbide.

A comparison test carried out with the same automobile using a gas bottle containing commercial acetylene dissolved in acetone, caused the engine to stall after a few kilometers. Examining the motor revealed heavy soot deposits in the pistons and in the combustion chambers.

As previously stated, another important characteristic of the gas according to this invention is its extremely low percentage of pollution in its use in automotive vehicles.

From a test run on the exhaust of an engine with appropriate infrared ray equipment of the Emanuel type, the grade of pollution turned out to be equal to 0.003, which is a value largely below that offered by gasoline (= 0.6) or liquefied petroleum gas (= 0.4).

It is easily foreseeable that in order to be conveniently employed in the field of automotive vehicles, the gas may be brought to a liquid form through processes already known of gas liquefaction.

For example, since acetylene presents a fairly high critical temperature (about 36°C), it may be placed in liquid form in gas bottles under a pressure of about 65 atmospheres even at room temperature. Other methods for bringing the gas to its liquid form may take advantage of the high solubility of said gas in organic liquids, such as for example, acetone.

It is furthermore obvious that the gas could be used in a mixture with other already known gases, such as for example the liquefied petroleum gas, or a gas obtained by the simple gasification of a coal schist removed of tar.

The gas according to this invention has also been tested for domestic use. Dispensed through a common gas burner it produces a flame having high heating power, which does not leave trace of soot on pots, as in contrast with acetylene produced through known methods. This characteristic allows to foresee the use of this gas in total or partial substitution of the presently used gas in bottles for domestic use.

Due to the excellent characteristics of combustion of the gas according to the present invention, it is easily foreseeable that, since it is obtained starting from coal, it could be employed in all those cases in which, although still resorting to coal as an energy source, it is preferred to employ a gaseous fuel in combustion plants, in the place of solid fuel.

It is equally also true that the process for obtaining
the gas involves a certain energetic expenditure,
but in the total energetic production cycle, it
may be foreseen that use of this gas is advantageous
with respect to direct use of coal.

As a matter of fact the solid residue which remains
after the development of the gas from carbide is
essentially formed by calcium hydrate which can
be recycled for producing calcium oxide, so that
the primary coal supply may be transformed with
extremely high efficiency in a gaseous fuel of high
quality and high thermal efficiency, at the expense
of a certain quantity of heat the destination of
which is for the production of calcium oxide and
the production of carbide.

The acetylene gas produced according to this invention
may also obviously be used advantageously as starting
material for the production of chemical substances
by synthesis.

Claims

1. A process for producing a gas consisting essentially
   of acetylene through reaction of water and a product
   consisting essentially of calcium carbide obtained
   in a manner which is known per se through reaction
   in an arc furnace of coke and calcium oxide, characterized
   in that said reaction between coke and calcium
   oxide takes place in the presence of particles which
   comprise aluminum oxide wherein said amount of
   aluminum oxide referred to the weight of calcium
   oxide used in the reaction is 0.5 to 3% by weight.

2. The process according to claim 1, wherein said quantity
   of aluminum oxide is comprised between 1.0 and 1.5%
   in weight.

3. The process according to claim 1 or 2 wherein said
   particles comprising aluminum oxide consist of
   an aluminum ore.

4. The process according to claim 3 wherein said aluminum
   ore is bauxite containing about 20% by weight of
   aluminum oxide.

5. The process according to any of the preceding claims
   wherein said particles comprising aluminum oxide
   have a particle size from 0.1 to 4 mm.

6. A gas consisting essentially of acetylene produced
   through the process claimed in claims 1 to 5.

7. A fuel for use in internal combustion engines consisting of the gas claimed in claim 6.

8. The fuel according to claim 7 for use in internal combustion engines in liquid form ·as dissolved in acetone solvent.

9. A process for producing a product consisting essentially of calcium carbide through reaction in an arc furnace in a manner which is known per se of coke and calcium oxide, characterized in that said reaction takes place in the presence of particles comprising aluminum oxide, wherein said amount of aluminum oxide referred to the weight of alcium oxide used in the reaction is 0.5 to 3% by weight.

10. The product consisting essentially of calcium carbide obtained through the process according to claim 9.